# EUROPEAN PATENT SPECIFICATION

(11) **EP 0 513 670 B1**
(45) Date of publication and mention of the grant of the patent: **11.01.1995**
(21) Application number: 92107738.4
(22) Date of filing: 07.05.1992
(51) Int. Cl.: F16F 7/08

(54) **Method for making a shock absorber for washing machines and shock absorber thus made**
Verfahren zur Herstellung eines Dämpfers für Waschmaschinen und Dämpfer demgemäss hergestellt
Méthode de fabrication d'un amortisseur pour machines à laver et amortisseur ainsi fabriqué

(30) Priority: 14.05.1991 IT PN910028
(43) Date of publication of application: 19.11.1992
(73) Proprietor: Zanussi Elettrodomestici S.p.A., I-33170 Pordenone (IT)
(72) Inventor: Durazzani, Piero, I-33080 Porcia, Pordenone (IT); Quattrin, Roberto, I-33080 Murlis di Zoppola, Pordenone (IT)
(74) Representative: Grünecker, Kinkeldey, Stockmair & Schwanhäusser Anwaltssozietät

(56) References cited:
- EP-A- 0 315 076
- FR-A- 1 087 894
- US-A- 3 795 201

## Description

The invention relates to a method for making a shock absorber for washing machines, particularly for laundry washers or combined laundry washers and driers, and to a shock absorber adapted to be mounted between a bottom structure of the machine and the laundering tub containing the rotatable drum, for effectively dampening the oscillations of the tub and drum assembly resulting from the rotation of the drum at the laundering and spin-drying speeds in the course of the execution of any selected laundering program.

Known washing machines are provided with shock absorbers for the above defined purpose. These known shock absorbers comprise a tubular metal casing and a piston adapted to slide back and forth within the casing and provided with a plurality of braking elements made of a conventional low-friction material and acting to dampen the oscillations of the tub and drum assembly by the effect of friction between the braking elements and the interior wall surface of the tubular casing. The tubular casing and the piston have their free ends connected respectively to a housing bottom structure of the machine and a lower part of the tub containing the rotatable drum. In a known shock absorber of this type as described in Italian Patent Application no. 34061-B/87, filed on 4-11-1987 in the name of Industrie Zanussi S.p.A., the metal casing is made of a drawn pipe stock or by welding a coiled sheet metal blank along its contiguous edges, the resulting metal casing being then enclosed in a plastic support structure having one open end by way of which the piston of the shock absorber is to be inserted, and a closed end configured so as to permit it to be hinged, as by means of a bolt, to the housing bottom structure of the machine.

In practical embodiments of shock absorbers of this type it is in any case extremely difficult to obtain a perfectly smooth interior wall surface of the tubular casings for frictionally cooperating with the braking elements of the piston during its reciprocation. This is because the formation of surface irregularities is practically inavoidable in the case of welded pipes, due to the welding operation, and in the case of drawn pipe stock, due to attrition in the course of the drawing operation. When tubular casings of theses types are cut to the required length from pipe stock material of greater length, there is the additional danger of the formation of burrs at the cutting locations.

The repeated contact of the piston braking elements with these surface irregularities or burrs of the tubular casing in operation of the machine may result in the braking elements being permanently deformed or damaged, thus impairing the reliability of the shock absorber in terms of its capability of dampening the oscillations of the tub.

It is therefore an object of the invention to eliminate these shortcomings by providing a novel method for making a shock absorber for washing machines, and a thus made shock absorber featuring the characteristics as set forth in the appended claims.

The characteristics of the invention will become more clearly evident from the following description, given by way of example with reference to the accompanying drawings, wherein:
- fig. 1: shows a longitudinally sectioned view of a shock absorber made by the method according to the invention, and
- fig. 2: shows a sectional view of the shock absorber taken along the line A-A in fig. 1.

With reference to the figures of the drawings, there is diagrammatically shown a structural particular of a shock absorber for washing machines, in particularly laundry washers or combined laundry washers and driers, operable to dampen the oscillations of the tub and drum assembly of machines of this type resulting from the rotation of the drum during execution of any selected laundering program.

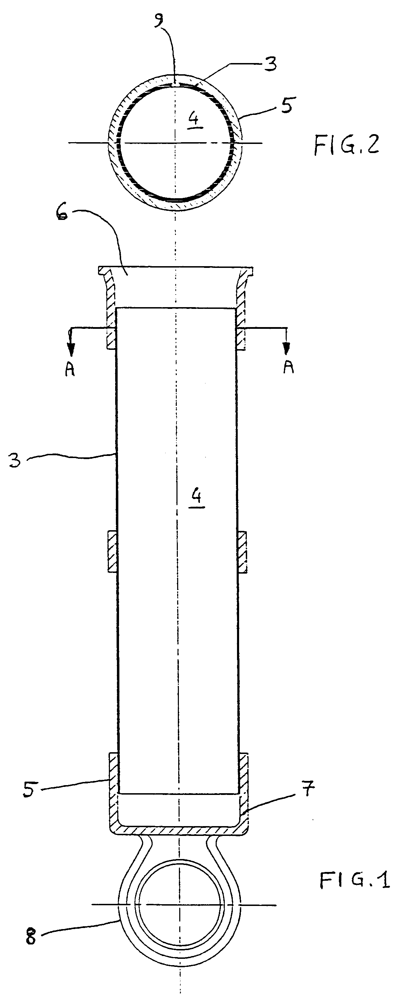

The shock absorber is of substantially conventional construction and composed of a tubular metal casing 3 as shown in fig. 1, and a piston adapted to slide back and forth in the internal bore 4 of the tubular casing and provided with a plurality of braking elements of a low-friction material (the piston and braking elements being not shown in the drawings), acting to produce a braking action as a result of friction between them and the internal wall surface of the tubular casing to thereby dampen the oscillations of the tub and drum assembly. The tubular casing 3 is enclosed in a plastic support structure 5 having an open end 6 for the insertion of the piston, the free end of which is provided with an eyelet for mounting it on a bolt projecting from a lower part of the lye tub of the machine, and a closed end 7 formed in one piece with an eyelet 8 for connection to a bolt (not shown) provided on the housing bottom structure of the machine.

The thus configured shock absorber is substantially identical to the one described in Italian Patent Application no. 34061-B/87, filed on 4-11-1987 in the name of Industrie Zanussi S.p.A. which is incorporated herein by reference.

The following description now refers to the method according to the invention for making the assembly composed of tubular casing 3 and plastic support structure 5, the description of the method employed for making the piston with its braking elements being omitted by reason of its being per se known.

The method to be described includes a first step of providing a planar metal blank (steel or the like) of quadrangular shape and with perfectly smooth main surfaces, this blank having been previously cut to the dimensions required for making the tubular casing from a stock material conventionally supplied in coils. In a second step of the method, the thus provided blank is circularly coiled upon itself about its vertical side in a bending operation, for instance by calendering, with a predetermined coiling diameter corresponding to the diameter of the tubular casing to be made, and in such a manner that the two facing boundary edges of the thus coiled blank are spaced from one another by a very small distance or gap 9 (cf. fig. 2) extending over the full length of the tubular casing for reasons to be explained as the description proceeds.

In a third step of the method, the thus obtained tubular metal casing is inserted into a conventional plastic processing machine, for instance an injection-moulding machine, in which the tubular casing is slipped onto a mandrel of the injection mould.

In a subsequent fourth step of the method, a plastic material is injection-moulded about the tubular casing to thereby form the support structure 5 with the desired shape and dimensions.

The advantages that may be obtained by the described manufacturing method are clearly evident: In the first place, since the tubular casing 3 of each shock absorber of this type is formed of a perfectly smooth and planar metal blank previously cut to the desired dimensions, the inner surface of the finished tubular casing will allways be perfectly smooth, as the further manufacturing process does not include any steps, such as drawing or welding operations, which might result in the formation of surface irregularities. On the other hand, since the thus formed tubular casing does not have to be cut to its final length, the formation of burrs on the inner surface is effectively avoided. This again is effective to securely avoid any deformation or damage of the braking elements of the piston of the shock absorber as a result of the friction between the braking elements and the internal surface of the tubular casing caused by the reciprocation of the piston within the tubular casing, thus ensuring reliable operation and a fully satisfactory dampening action of the described shock absorber.

Inasmuch, moreover, as each tubular casing is obtained by performing the simple manufacturing steps described on a readily available and economically convenient type of material instead of having to employ a more costly material such as welded or drawn pipe stock, as in the case of known shock absorbers, and thanks to the elimination of the necessity of additional manufacturing steps such as cutting each tubular casing to the desired length, the invention results in a considerably simplified and thus more economical manufacturing process.

## Claims

1. A method for making a shock absorber for washing machines, particularly for laundry washers or combined laundry washers and driers comprising a laundring tub and a rotatable drum for containing the laundry, said shock absorber being composed of a tubular casing enclosed in a plastic support structure, and a piston adapted to reciprocate within said tubular casing and provided with a plurality of braking elements made of a conventional low-friction material and adapted to dampen the oscillations of the tub and drum assembly by friction generated between said braking elements and the inner surface of said tubular casing, said tubular casing and said piston having their free ends connected respectively to a housing bottom structure of the machine and a lower part of said tub, said method being characterized by including a first step of providing a planar blank preferably of quadrangular shape with perfectly smooth main surfaces, said blank having previously been cut from a stock material to the dimensions corresponding to those required for said tubular casing, a second step in which said planar blank is circularly coiled upon itself about its vertical side in a folding operation, for instance a calendering operation or the like, with a predetermined coiling diameter corresponding to the diameter of said tubular casing, and in a manner resulting in that the two mutually facing boundary edges of the thus coiled blank are spaced from one another by a slight distance, a third step in which the thus formed tubular casing is inserted into a conventional plastic processing machine, and a fourth step in which said plastic support structure is injection-moulded to its desired final shape and dimensions about the outer surface of said tubular casing.

2. A method according to claim 1, characterized in that said planar blank is made of a metal (steel or the like).

3. A shock absorber made by performing the method according to claims 1 and 2, comprising a tubular casing preferably made of metal and enclosed in a plastic support structure, and a piston adapted to reciprocate within said tubular casing and provided with braking elements made of a conventional low-friction material, said tubular casing and said piston being adapted to have their free ends connected respectively to a housing bottom structure of the machine and to a lower part of the laundering tub, characterized in that said tubular casing (3) is of an open construction with its mutually facing boundary edges spaced from one another by a slight distance (9) over the full length of said casing.

## Patentansprüche

1. Verfahren zum Herstellen eines Stoßdämpfers für Waschmaschinen, insbesondere für Waschmaschinen oder kombinierte Waschmaschinen und -trockner, die einen Waschbottich und eine drehbare Trommel umfassen, die die Wäsche enthält, wobei der Stoßdämpfer aus einer röhrenförmigen Ummantelung besteht, die von einer Kunststoff-Tragestruktur umschlossen ist, sowie aus einem Kolben, der sich in der röhrenförmigen Ummantelung hin- und herbewegt und mit einer Vielzahl von Bremselementen versehen ist, die aus einem herkömmlichen reibungsarmen Material bestehen und die Schwingungen der Bottich- und-Trommel-Baugruppe durch Reibung dämpfen, die zwischen den Bremselementen und der Innenfläche der röhrenförmigen Ummantelung erzeugt wird, wobei die freien Enden der röhrenförmigen Ummantelung und des Kolbens an einer Gehäusebodenstruktur der Maschine bzw. einem unteren Teil des Bottichs angebracht sind, wobei das Verfahren **dadurch gekennzeichnet** ist, daß es einen ersten Schritt der Bereitstellung eines planen Rohlings enthält, der vorzugsweise viereckig geformt ist und vollkommen glatte Hauptflächen hat, wobei der Rohling zuvor aus einem Ausgangsmaterial auf die Maße geschnitten worden ist, die denen für die röhrenförmige Ummantelung erforderlichen entsprechen, einen zweiten Schritt, in dem der plane Rohling in einem Biegeverfahren, beispielsweise einem Walzverfahren oder ähnlichem, mit einem vorgegebenen Rolldurchmesser, der dem Durchmesser der röhrenförmigen Ummantelung entspricht, und auf eine Weise, die dazu führt, daß die beiden einander zugewandten Abschlußkanten des so gerollten Rohlings um einen geringfügigen Abstand voneinander beabstandet sind, kreisförmig um seine vertikale Seite auf sich selbst aufgerollt wird, einen dritten Schritt, in dem die so hergestellte röhrenförmige Ummantelung in eine herkömmliche Kunststoffverarbeitungsmaschine eingeführt wird, und einen vierten Schritt, in dem die Kunststoff-Tragestruktur in ihrer gewünschten endgültigen Form und Abmessungen um die Außenfläche der röhrenförmigen Ummantelung herum spritzgegossen wird.

2. Verfahren nach Anspruch 1, **dadurch gekennzeichnet,** daß der plane Rohling aus Metall (Stahl oder ähnlichem) besteht.

3. Stoßdämpfer, der durch Ausführung des Verfahrens nach Anspruch 1 und 2 hergestellt wird, der eine röhrenförmige Ummantelung umfaßt, die vorzugsweise aus Metall besteht und von einer Kunststoff-Tragestruktur umschlossen ist, sowie einen Kolben, der sich in der röhrenförmigen Ummantelung hin- und herbewegt und mit Bremselementen versehen ist, die aus einem herkömmlichen reibungsarmen Material bestehen, wobei die freien Enden der röhrenförmigen Ummantelung und des Kolbens an einer Gehäusebodenstruktur der Maschine, bzw. einem unterem Teil des Waschbottichs angebracht sind, **dadurch gekennzeichnet,** daß die röhrenförmige Ummantelung (3) einen offenen Aufbau aufweist, wobei ihre einander zugewandten Abschlußkanten über die gesamte Länge der Ummantelung um einen geringfügigen Abstand (9) voneinander beabstandet sind.

## Revendications

1. Procédé pour fabriquer un amortisseur pour machines à laver, en particulier pour des lave-linge ou des machines combinées à laver et sécher le linge, comprenant une cuve de lavage et un tambour tournant pour contenir le linge, cet amortisseur étant composé d'un carter tubulaire enfermé dans une structure support en matière plastique et d'un piston adapté pour se déplacer dans les deux sens à l'intérieur de ce carter tubulaire et équipé d'une multiplicité d'éléments de freinage en un matériau à faible coefficient de frottement conventionnel et adapté pour amortir les oscillations de l'ensemble de la cuve et du tambour grâce au frottement produit entre les éléments de freinage et la surface intérieure de ce carter tubulaire, le carter tubulaire et le piston ayant leurs extrémités libres raccordées respectivement à la structure du fond de l'armoire de la machine et à une partie inférieure de la cuve, ce procédé étant caractérisé en ce qu'il comporte une première étape consistant à procurer une ébauche plane de forme de préférence quadrangulaire avec des surfaces principales parfaitement lisses, cette ébauche ayant été précédemment coupée dans un matériau aux dimensions correspondant à celles recherchées pour le carter tubulaire, une deuxième étape dans laquelle cette ébauche plane est enroulée circulairement sur elle-même autour de son côté vertical dans une opération de cintrage, par exemple une opération de calandrage ou l'analogue, avec un diamètre d'enroulement prédéterminé correspondant au diamètre du carter tubulaire et de telle manière que les deux bords frontières en vis-à-vis l'un de l'autre de l'ébauche ainsi enroulée soient espacés l'un de l'autre d'une courte distance, une troisième étape dans laquelle le carter tubulaire ainsi formé est introduit dans une machine conventionnelle à traiter les matières plastiques, et une quatrième étape dans laquelle la structure support en matière plastique est moulée par injection à sa forme et à ses dimensions finales recherchées autour de la surface extérieure du carter tubulaire.

2. Procédé selon la revendication 1, caractérisé en ce que cette ébauche plane est en métal (acier ou l'analogue).

3. Amortisseur fabriqué par le procédé selon les revendications 1 et 2, comprenant un carter tubulaire de préférence métallique, enfermé dans une structure support en matière plastique, et un piston adapté pour se déplacer dans les deux sens à l'intérieur du carter tubulaire et équipé d'éléments de freinage en un matériau à faible coefficient de frottement conventionnel, ce carter tubulaire et ce piston étant adaptés pour avoir leurs extrémités libres raccordées respectivement à la structure du fond de l'armoire de la machine et à une partie inférieure de la cuve de lavage, caractérisé en ce que le carter tubulaire (3) a une structure ouverte avec ses bords frontières en vis-à-vis l'un de l'autre espacés l'un de l'autre d'une courte distance (9) sur la totalité de la longueur du carter.
